# FASCICULE DE BREVET EUROPEEN

(11) **EP 3 428 248 B1**
(45) Date de publication et mention de la délivrance du brevet: **23.02.2022**
(21) Numéro de dépôt: 18185334.2
(22) Date de dépôt: 19.12.2003
(51) Int. Cl.: C10G 45/08, B01J 23/85

(54) **CATALYSEURS PARTIELLEMENT COKES UTILISABLES DANS L'HYDROTRAITEMENT DES COUPES CONTENANT DES COMPOSES SOUFRES ET DES OLEFINES**
TEILWEISE VERKOKTE KATALYSATOREN, DIE ZUM HYDROTREATING VON SCHNITTEN VERWENDBAR SIND, DIE SCHWEFELVERBINDUNGEN UND OLEFINE ENTHALTEN
PARTIALLY COKED CATALYSTS FOR USE IN THE HYDROTREATMENT OF CUTS CONTAINING SULPHUROUS COMPOUNDS AND OLEFINS

(30) Priorité: 29.01.2003 FR 0301026
(43) Date de publication de la demande: 16.01.2019
(62) Demande divisionnaire de: 03293276.6
(73) Titulaire: IFP Energies nouvelles, 92852 Rueil-Malmaison Cedex (FR)
(72) Inventeur: UZIO, Denis, 69600 OULLINS (FR); MARCHAL-GEORGE, Nathalie, 69230 SAINT GENIS LAVAL (FR); BOUCHY, Christophe, 69007 LYON (FR); PICARD, Florent, 76110 BRETTEVILLE DU GRAND CAUX (FR)
(74) Mandataire: IFP Energies nouvelles

(56) Documents cités:
- EP-A1- 0 541 994
- EP-A1- 0 745 660
- US-B1- 6 372 125
- J.T. MILLER ET AL: "Selective Hydrodesulfurization of FCC Naphtha with Supported MoS2 Catalysts: The Role of Cobalt", JOURNAL OF CATALYSIS., vol. 193, no. 1, 1 juillet 2000 (2000-07-01), pages 123-131, XP55487565, US ISSN: 0021-9517, DOI: 10.1006/jcat.2000.2873

## Description

La présente invention relève du domaine des hydrotraitements ou, plus précisément, de l'hydroraffinage ou de l'hydrodésulfuration de charges hydrocarbonées contenant des composés soufrés et des oléfines. L'invention relève, en particulier, du domaine des catalyseurs mis en œuvre dans ces procédés d'hydrotraitement, d'hydroraffinage ou d'hydrodésulfuration.

Les coupes essences, et plus particulièrement les essences issues du craquage catalytique (FCC), peuvent comporter, par exemple, approximativement de 20 à 40 % en poids de composés oléfiniques, de 30 à 60 % en poids de composés aromatiques et de 20 à 50 % en poids de composés saturés de type paraffines ou naphtènes. Parmi les composés oléfiniques, les oléfines ramifiées sont majoritaires par rapport aux oléfines linéaires et cycliques. Ces essences contiennent également des traces de composés hautement insaturés de type dioléfiniques qui sont susceptibles de désactiver les catalyseurs par formation de gommes.

Le brevet EP 0 685 552 décrit un procédé permettant d'hydrogéner sélectivement les dioléfines, c'est à dire sans transformer les oléfines, avant d'effectuer l'hydrotraitement pour l'élimination du soufre.

Les essences de craquage catalytique, qui peuvent représenter de 30 à 50 % du pool essence, comportent généralement des teneurs en oléfines et en soufre élevées. Le soufre présent dans les essences reformulées est imputable, à près de 90 %, à l'essence de craquage catalytique. La désulfuration ou l'hydrodésulfuration des essences, et principalement des essences de FCC, est donc d'une importance évidente.

L'hydrodésulfuration des essences de craquage catalytique, lorsqu'elle est réalisée dans des conditions classiques connues de l'homme du métier, permet de réduire la teneur en soufre. Cependant, ce procédé présente l'inconvénient majeur d'entraîner une chute très importante de l'indice d'octane, en raison de la saturation de l'ensemble des oléfines au cours de l'hydrotraitement.

Le brevet américain US 5,318,690 propose un procédé consistant à fractionner l'essence, à adoucir la fraction légère et à hydrotraiter la fraction lourde sur un catalyseur conventionnel puis, à la traiter sur une zéolithe ZSM5 pour retrouver le niveau de l'indice d'octane initial. Ce procédé permet de désulfurer profondément les essences de FCC tout en maintenant l'indice d'octane à un niveau élevé.

D'autres développements sont orientés vers la recherche d'un système catalytique intrinsèquement sélectif. D'une façon générale, les catalyseurs utilisés pour ce type d'application sont des catalyseurs de type sulfure contenant un élément du groupe VIB (Cr, Mo, W) et un élément du groupe VIII (Fe, Ru, Os, Co, Rh, Ir, Pd, Ni, Pt).

Le brevet américain US 6,372,125 décrit un catalyseur comprenant un support amorphe et au moins un métal carburé dans le groupe VIB de la classification périodique des éléments.

J.T. MILLER ET AL: "Selective Hydrodesulfurization of FCC Naphtha with Supported MoS2 Catalysts: The Role of Cobalt", JOURNAL OF CATALYSIS., vol. 193, no. 1, 1 juillet 2000 (2000-07-01), pages 123-131, XP55487565, [US] ISSN: 0021-9517, DOI: 10.1006/jcat.2000.2873 décrit un procédé d'hydrotraitement d'essences de FCC.

Le brevet européen EP 0 745 660 propose une méthode de désulfuration d'essences provenant d'un craquage catalytique comprenant le pré-traitement d'un catalyseur pour déposer entre 3 % et 10 % en poids de carbone, ledit carbone ayant un rapport atomique C/H qui n'est pas supérieur à 0,7. Cette méthode permet d'améliorer les performances catalytiques en terme de stabilité.

Le brevet européen EP 0 541 994 décrit un procédé de régénération d'un catalyseur comprenant un support et un métal actif sélectionné dans les groupes VIA et VIII de la classification périodique des éléments, la régénération dudit catalyseur étant réalisée de manière à obtenir une teneur en coke résiduel comprise entre 0,5 et 10 % en poids.

Un objet de la présente invention est de fournir un catalyseur permettant de réduire la teneur en soufre de la charge et de réduire la saturation des oléfines de manière à maintenir l'indice d'octane à un niveau élevé. On vise ainsi à produire des essences reformulées répondant aux nouvelles normes d'environnement. Ces normes nécessitent notamment que l'on diminue faiblement la concentration en oléfines afin de conserver un indice d'octane élevé, mais également que l'on diminue de façon importante la teneur en soufre. Ainsi, les normes environnementales en vigueur et futures contraignent les raffineurs à abaisser la teneur en soufre dans les essences à des valeurs inférieures ou au plus égales à 50 ppm en 2003 et, à 10 ppm au-delà de 2005. Ces normes concernent la teneur totale en soufre mais également la nature des composés soufrés tels que les mercaptans.

Un autre objet de l'invention est d'augmenter la sélectivité K(_{HDS})/K(_{HDO}), c'est-à-dire la sélectivité exprimée sous la forme du rapport entre les constantes de vitesse de transformation des composés soufré en H2S (K_{HDS}) et la constante de vitesse d'hydrogénation des oléfines (K_{HDO}), celle-ci étant définie comme étant le rapport entre une constante de vitesse réactionnelle correspondant aux réactions d'hydrodésulfuration et une constante de vitesse réactionnelle correspondant aux réactions d'hydrogénation des oléfines. Cette sélectivité doit être augmentée tout en maintenant un bon niveau d'activité.

Il a été trouvé un catalyseur pour l'hydrodésulfuration sélective de charges hydrocarbonées comportant des composés soufrés et des oléfines permettant de réaliser les objets précédemment évoqués. Le catalyseur selon l'invention est sous une forme sulfuré et comprend un support choisi parmi les oxydes réfractaires, au moins un métal choisi dans le groupe constitué par les Cobalt et Molybdène et du carbone, la teneur en carbone étant inférieure ou égale à 2,6 % en poids.

La description porte également sur une méthode de fabrication du catalyseur décrit ci-dessus, ainsi que sur un procédé mettant en œuvre ce catalyseur pour l'hydrodésulfuration sélective de charges hydrocarbonées contenant des composés soufrés et des oléfines.

Les caractéristiques essentielles de l'invention sont définies dans le libellé de la revendication indépendante 1. D'autres caractéristiques sont explicitement définies dans le libellé de la revendication 2.

Un avantage de l'invention est de fournir un catalyseur permettant de réduire la teneur en soufre d'une charge hydrocarbonée, et ceci sans perte de rendement en essence et en minimisant la diminution de l'indice d'octane.

Un autre avantage de l'invention est de fournir un catalyseur utilisable dans tout procédé capable de désulfurer des charges hydrocarbonées.

La teneur en carbone est comprise entre 0,5 et 2,6 % en poids, de manière plus préférée entre 1 et 2,6 % en poids.

Le support est l'alumine qui peut être préparée à partir de tout type de précurseurs et outils de mise en forme connus de l'homme de métier.

surface spécifique du support inférieure à 200 m2/g, de manière plus préférée inférieure à 180 m2/g et, de manière encore plus préférée inférieure à 150 m2/g.

La surface spécifique peut être déterminée par la méthode proposée par Brunauer, Emmet et Teller utilisant l'adsorption physique d'Azote à 77K [S. Brunauer, P.H. Emmet, E. Teller, (Journal de la société Américaine de Chimie, J. Am. Chem. Soc.) volume 60 (1938) page 309].

La combinaison des deux propriétés du catalyseur constituées par une teneur en carbone supérieure à 0,5 % en poids et inférieure à 2,6 % en poids, et une surface spécifique du support inférieure à 200 m2/g conduit à une amélioration encore plus marquée de la sélectivité [K_{HDS}/_{HDO}] des catalyseurs. Ceci peut être lié au fait que le gain apporté par une quantité donnée de carbone est fonction de la surface spécifique du support.

Ainsi, pour des supports ayant une surface spécifique élevée, c'est à dire supérieure à 200 m2/g, et ayant une teneur en carbone inférieure à 2,6 %, l'effet sur les performances du catalyseur est moins marqué. Au contraire, pour des supports ayant une surface spécifique inférieure à 200 m2/g, cet effet est beaucoup plus significatif.

Une autre raison pour laquelle il est avantageux d'utiliser des supports ayant une faible surface spécifique provient du fait que cette surface est susceptible de participer à l'activation et à la migration vers des sites catalytiques des molécules hydrocarbonées, notamment oléfiniques. Une interprétation possible des gains de sélectivité enregistrés serait donc que la minimisation de ce processus d'activation permette de limiter les réactions mettant en jeu des composés oléfiniques, à savoir l'hydrogénation par addition d'hydrogène (qui est pénalisante pour le maintien de l'indice d'octane) et le cas échéant, la recombinaison avec le sulfure d'hydrogène (qui est pénalisante pour la désulfuration). L'utilisation de support ayant une faible surface spécifique permettrait ainsi d'augmenter le facteur de sélectivité [K_{HDS}/_{HDO}] autrement dit de limiter la saturation des oléfines pour un même taux d'élimination des composés soufrés organiques.

Selon la présente invention, le catalyseur comprend du cobalt et du molybdène.

La présente description inclut une méthode de fabrication de catalyseurs, pour l'hydrodésulfuration sélective de charges hydrocarbonées comportant des composés soufrés et des oléfines, comprenant :
- une étape d'imprégnation des métaux du groupes VI et/ou VIII sur un support,
- une étape d'activation, et
- une étape de dépôt de carbone par mise en contact avec au moins un composé hydrocarboné, de manière à déposer une quantité de carbone inférieure ou égale à 2,8 % en poids par rapport à la masse de catalyseur.

L'étape d'imprégnation peut être réalisée par toute méthode connue de l'homme du métier. On peut, par exemple, utiliser une méthode d'imprégnation à sec.

Selon la méthode de fabrication de catalyseur de l'invention, le support est soumis à une étape d'activation. Cette étape d'activation peut être réalisée après l'imprégnation des éléments sur le support et éventuellement après la mise en forme du catalyseur. Cette étape d'activation a généralement pour but de transformer les précurseurs moléculaires des éléments en phase partiellement oxydée. Il s'agit dans ce cas d'un traitement oxydant, mais une réduction directe peut également être effectuée.

Lors de l'étape d'activation, le catalyseur est généralement mis sous une forme sulfurée obtenue après un traitement en température, par mise en contact avec un composé organique soufré décomposable et générateur de sulfure d'hydrogène. Alternativement, le catalyseur peut être directement mis en contact avec un flux gazeux de sulfure d'hydrogène.

De préférence, l'étape d'activation est une étape de sulfuration réalisée par mise en contact avec un gaz comprenant de l'hydrogène et du sulfure d'hydrogène.

Les conditions opératoires préférées de l'étape d'activation peuvent être :
- une température finale comprise entre 200 et 900°C, de préférence entre 200 et 500°C, de manière plus préférée entre 250 et 450°C,
- une pression comprise entre 0,1 et 3 MPa, de préférence entre 0,1 et 2 MPa, de manière plus préférée entre 0,1 et 1,5 MPa,
- un pourcentage volumique de sulfure d'hydrogène dans le gaz d'activation allant de 5 à 100 %, de préférence de 5 à 50 %, de manière plus préférée de 5 à 30 %.
- un débit de gaz d'activation allant de 1 à 30, de préférence de 1 à 20, de manière plus préférée de 1à 10 I/h/g de catalyseur.

Cette étape peut être réalisée in situ ou ex situ, c'est à dire à l'intérieur ou à l'extérieur du réacteur utilisé pour l'hydrodésulfuration.

Les conditions de l'étape de sulfuration peuvent être choisies de sorte que la teneur globale en soufre dans le catalyseur est comprise entre 60 et 140 %, de manière préférée entre 70 et 130 %, de manière plus préférée entre 80 et 120 % de la teneur en soufre nécessaire pour la sulfuration totale de l'ensemble des métaux dudit catalyseur appartenant aux groupes VI et VIII de classification périodique des éléments.

A titre d'exemple, pour un catalyseur n'étant pas en accord avec la présente invention, comportant du tungstène ou du molybdène, la teneur en soufre nécessaire pour une sulfuration totale de ce métal est égale à 2 fois la teneur molaire en métal dudit catalyseur. De même, pour un catalyseur n'étant pas en accord avec la présente invention comportant du cobalt, la teneur en soufre nécessaire pour une sulfuration totale de ce métal est égale au produit de 8/9 par la teneur molaire en métal dudit catalyseur et pour un catalyseur comportant du nickel, la teneur en soufre nécessaire pour une sulfuration totale de ce métal est égal au produit de 2/3 par la teneur molaire en métal dudit catalyseur.

Selon la méthode de fabrication du catalyseur de l'invention le support seul, ou éventuellement le support déjà imprégné et/ou activé, est soumis à une étape de dépôt de carbone dans laquelle on met en contact le support seul, ou éventuellement le support déjà imprégné et/ou activé, avec un flux liquide ou gazeux comprenant au moins un composé hydrocarboné en proportion plus ou moins importante dans ledit flux selon la teneur en carbone désirée. On peut également faire varier la teneur en carbone dudit catalyseur en faisant varier la durée de l'étape de dépôt de carbone. Les composés hydrocarbonés peuvent être des oléfines, des naphtènes ou des aromatiques, éventuellement des paraffines.

Le dépôt de carbone peut être réalisé avant, pendant ou après l'étape d'activation précédemment décrite.

De préférence, l'étape de dépôt de carbone est réalisée pendant l'étape d'activation précédemment décrite. Dans ce cas, l'ajout du ou des composés hydrocarbonés peut se faire au moment de l'injection du composé soufré. Il est également possible de choisir un composé de la famille des polysulfures contenant à la fois les éléments soufre et carbone.

Selon un mode alternatif, l'étape de dépôt de carbone peut être réalisée en même temps que l'imprégnation des métaux du groupes VI et/ou VIII, en déposant un précurseur contenant du carbone au moment de l'imprégnation des métaux du groupes VI et/ou VIII. Dans ce cas, l'étape d'activation doit généralement être adaptée pour permettre la sulfuration du catalyseur tout en conservant la teneur souhaitée en carbone à la surface dudit catalyseur.

Le précurseur contenant du carbone peut être, par exemple, un acide alpha alcool tel que l'acide citrique, l'acide maléique, l'acide tartrique ou l'acide glycolique. De préférence, ce précurseur contenant du carbone est de l'acide citrique.

La méthode de fabrication de catalyseur peut, en outre, comprendre:
- une étape de mise en forme,
- une étape de séchage, et
- une étape de calcination.

Ces étapes de mise en forme, de séchage et de calcination peuvent être réalisées par toute méthode connue de l'homme du métier.

La présente invention porte également sur un procédé, pour l'hydrodésulfuration sélective de charges comportant des composés soufrés et des oléfines, utilisant le catalyseur décrit ci-dessus.

La charge est généralement une coupe essence comportant du soufre telle que, par exemple, une coupe issue d'une unité de cokéfaction (coking), de viscoréduction (visbreaking), de vapocraquage ou de craquage catalytique (FCC).

De préférence, la charge comporte une coupe essence issue d'une unité de craquage catalytique s'étendant typiquement des hydrocarbures à 5 atomes de carbones jusqu'à des composés ayant un point d'ébullition d'environ 250°C. Cette essence peut éventuellement comprendre une fraction significative d'essence provenant d'autres procédés de production telle que la distillation atmosphérique (essence straight run) ou de procédés de conversion (essence de coker ou de vapocraquage).

Les conditions opératoires permettant une hydrodésulfuration sélective des essences de FCC sont une température comprise entre 200 et 400°C, préférentiellement entre 250 et 350°C, une pression totale comprise entre 0,5 et 3 bar et plus préférentiellement entre 1 et 2,5 MPa avec un ratio volumique entre l'hydrogène et les hydrocarbures compris entre 50 et 600 litres/litre, de préférence entre 100 et 400 litres/litre.

### Exemple 1

Le catalyseur selon l'invention est préparé par imprégnation à sec d'une solution d'heptamolybdate d'ammonium et de nitrate de cobalt. Le support est une alumine delta de 130 m2/g de volume poreux total égal à 1,04 cc/g. Le catalyseur est ensuite séché et calciné sous air à 500°C. Avant test, les catalyseurs subissent un traitement en température et sous flux d'hydrogène et de sulfure d'hydrogène destiné à transformer les phases oxydes en phases totalement sulfurées. Un composé hydrocarboné, en l'occurrence du cyclohexène (3% vol.), a été rajouté au flux gazeux afin de déposer du carbone. Cette étape de sulfuration est réalisée avec un palier à 400°C, sous un flux contenant 15 % en volume de sulfure d'hydrogène dilué dans l'hydrogène, la durée du palier à 400°C étant choisi en fonction de la teneur en carbone à déposer. Les catalyseurs finaux contiennent 3,03 % poids de cobalt et 10,1% de molybdène, exprimés sous leur forme oxyde (CoO et MoO3 respectivement). Les autres caractéristiques des catalyseurs préparés selon l'invention sont rassemblées dans le tableau 1.Un mélange synthétique comportant 30 % en poids de toluène, 1000 ppm de soufre sous la forme de Me3-thiophène, 10 % en poids d'oléfines sous la forme de 2-3 diméthylbutène-2, dilué dans du n-heptane, est traité de manière à effectuer la décomposition des composés organiques du soufre. La réaction est effectuée à une température de 240°C dans un réacteur de type lit traversé dans les conditions suivantes : P=2 MPa, H2/HC=300 litres/litre de charge, VVH=8 h-1. Dans tous les cas, l'analyse des composés soufrés organiques résiduels se fait après élimination du sulfure d'hydrogène issu de la décomposition. Les effluents sont analysés par chromatographie en phase gazeuse pour la détermination des concentrations en hydrocarbures et par la méthode décrite par la norme NF M 07075 pour la détermination du soufre total. Les résultats (tableau 1) sont exprimés en terme de sélectivité définie par le rapport de constante de vitesse K_{HDS}/K_{HDO} en supposant un ordre 1 par rapport aux composés soufrés pour la réaction d'HDS et un ordre 0 par rapport aux oléfines pour la réaction d'HDO. Ces rapports sont exprimés en relatif par rapport au catalyseur 1 sans carbone.

**Tableau 1 : Caractéristiques et performances catalytiques.**

| | % pds C (*) | % pds CoO (**) | % pds MoO₃ (**) | Constante d'activité K _{HDS} | Sélectivité K _{HDS} / K HDO |
|---|---|---|---|---|---|
| catalyseur 1 | 0 | 3,3 | 10,1 | 1 | 1 |
| catalyseur 2 | 0,7 | 3,3 | 10,1 | 1,02 | 1,06 |
| catalyseur 3 | 1,9 | 3,3 | 10,1 | 1,05 | 1,18 |
| catalyseur 4 | 2,4 | 3,3 | 10,1 | 1,07 | 1,20 |
| catalyseur 5 | 2,6 | 3,3 | 10,1 | 1,01 | 1,08 |
| catalyseur 6 | 2,8 | 3,3 | 10,1 | 1,02 | 1,06 |
| catalyseur 7 | 3,0 | 3,3 | 10,1 | 0,97 | 1,05 |
| catalyseur 8 | 6 | 3,3 | 10,1 | 0,82 | 1,03 |

| | | | | | |
|---|---|---|---|---|---|
| * : mesuré avant test catalytique **: mesuré après calcination | | | | | |

Il apparaît donc que pour des activités hydrodésulfurantes voisines, la saturation des oléfines est inférieure (HDO) pour les catalyseurs contenant du carbone. Des teneurs en carbone trop importantes induisent une perte d'activité en hydrodésulfuration conséquente sans augmenter significativement la sélectivité.

### Exemple 2 (non appartenant à l'invention)

Cet exemple présente le cas de catalyseurs à base de nickel supporté sur alumine. Les catalyseurs sont préparés par imprégnation à sec d'une solution de nitrate de nickel suivie d'un séchage et d'une calcination sous air en température. L'étape d'activation est identique à celle présentée dans l'exemple 1, soit un traitement en température sous H2/H2S/cyclohexène (3 % volume) pour les catalyseurs 10 et 11, et sous H2/H2S pour le catalyseur 9. La réaction test et les conditions des essais sont identiques à celles utilisées dans l'exemple 1. Les caractéristiques de ces solides ainsi que leurs performances en hydrodésulfuration sélective sont résumées dans le tableau 2. Les résultats sont exprimés en relatif par rapport au catalyseur 9 sans carbone.

**Tableau 2 : Caractéristiques et propriétés catalytiques.**

| | % pds C (*) | % pds NiO | S BET du support m²/g | Constante d'activité K _{HDS} | Sélectivité K _{HDS}/K HDO |
|---|---|---|---|---|---|
| Catalyseur 9 | 0 | 18 | 130 | 1 | 1 |
| Catalyseur 10 | 0,9 | 18 | 130 | 1,03 | 1,28 |
| Catalyseur 11 | 5 | 18 | 130 | 0,92 | 1,10 |

| | | | | | |
|---|---|---|---|---|---|
| * : mesuré avant test catalytique | | | | | |

La sélectivité est supérieure pour les catalyseurs 10 et 11 préalablement coké. Cependant, on note que le catalyseur 11 ne présente pas des performances intéressantes en terme d'activité en hydrodésulfuration. Le dépôt d'une quantité de carbone correspondant à moins de 3 % en poids du catalyseur a donc un effet bénéfique sur la sélectivité des catalyseurs Ni/alumine.

### Exemple 3

Dans cet exemple sont comparés des catalyseurs à base de CoMo/alumine, présentant le même taux de carbone, proche de 1% en poids, mais des surfaces spécifiques différentes (respectivement 130 m2/g pour le catalyseur 2 suivant l'invention et 220 m2/g pour le catalyseur 10 comparatif). Les conditions opératoires de préparation des catalyseurs de cet exemple sont identiques à celles de l'exemple 1.

Les caractéristiques de ces solides ainsi que leurs performances en hydrodésulfuration sélective sont résumées dans le tableau 3. Le catalyseur 2 est pris comme catalyseur de référence.

**Tableau 3 : Caractéristiques et propriétés catalytiques.**

| | % pds C (*) | % pds CoO (**) | % pds MoO₃ (**) | S _{BET} du support m²/g | Constante d'activité K _{HDS} | Sélectivité K _{HDS}/K HDO |
|---|---|---|---|---|---|---|
| Catalyseur 2 | 0,7 | 3,3 | 10,1 | 130 | 1 | 1 |
| Catalyseur 12 | 0,7 | 3,3 | 10,1 | 50 | 0,95 | 1,12 |
| Catalyseur 13 | 0,7 | 3,3 | 10,1 | 190 | 1,01 | 0,95 |
| Catalyseur 14 | 0,9 | 3,3 | 10,1 | 220 | 1,01 | 0,87 |

| | | | | | | |
|---|---|---|---|---|---|---|
| * : mesuré avant test catalytique **: mesuré après calcination | | | | | | |

Pour le catalyseur 14 ayant une surface spécifique de 220 m2/g, la même teneur en carbone déposée conduit à une sélectivité inférieure aux catalyseurs 2, 12 et 13 ayant une surface spécifique plus faible.

### Exemple 4

Le catalyseur 15 selon l'invention est préparé par imprégnation à sec d'une solution constituée d'oxyde de molybdène MoO3 en présence d'H2O2, d'hydroxyde de Cobalt Co(OH)2 et d'acide citrique avec ratio 1,5 mole d'acide citrique/mole molybdène. Le catalyseur est ensuite séché et calciné sous air et sulfuré sous un mélange gazeux H2/H2S. Le catalyseur 16 selon l'invention est préparé en ajoutant l'acide citrique (ratio 1,5 mole d'acide citrique/mole molybdène) après une étape de coimprégnation d'une solution d'heptamolybdate d'ammonium et de nitrate de cobalt et de calcination sous air. Le catalyseur est finalement sulfuré sous un mélange gazeux H2/H2S. Les caractéristiques de ces solides ainsi que leurs performances en hydrodésulfuration sélective sont résumées dans le tableau 4. Les performances sont exprimées en relatif par rapport au catalyseur 1 pris comme référence.

**Tableau 4 : Caractéristiques et propriétés catalytiques.**

| | % pds C (*) | % pds CoO (**) | % pds MoO₃ (**) | S BET du support m²/g | Constante d'activité K _{HDS} | Sélectivité K _{HDS}/K HDO |
|---|---|---|---|---|---|---|
| Catalyseur 1 | 0 | 3,3 | 10,1 | 130 | 1 | 1 |
| Catalyseur 15 | 2,1 | 3,5 | 10,2 | 130 | 1,03 | 1,20 |
| Catalyseur 16 | 2,1 | 3,4 | 10,1 | 130 | 0,98 | 1,20 |

| | | | | | | |
|---|---|---|---|---|---|---|
| * : mesuré avant test catalytique. **: mesuré après calcination | | | | | | |

Ce mode de dépôt du carbone conduit donc à des résultats similaires au mode de dépôt utilisé dans les exemples précédents et peut donc être utilisé préférentiellement au choix de l'homme de métier.

## Revendications

1. Procédé, pour l'hydrodésulfuration sélective des essences de FCC comportant des composés soufrés et des oléfines, s'étendant des hydrocarbures à 5 atomes de carbones jusqu'à des composés ayant un point d'ébullition de 250°C, ledit procédé utilisant un catalyseur sous forme sulfurée et comprenant un support d'alumine, du cobalt et du molybdène et du carbone, la teneur en carbone étant comprise entre 0,5 et 2,6 % en poids, la surface spécifique du support étant inférieure à 200 m²/g, ledit procédé étant effectué à une température comprise entre 200 et 400°C, une pression totale comprise entre 1 et 2,5 MPa avec un ratio volumique entre l'hydrogène et les hydrocarbures compris entre 50 et 600 litres/litre.

2. Procédé selon la revendication 1, **caractérisé en ce que** la surface spécifique du support est inférieure à 150 m²/g.

## Patentansprüche

1. Verfahren zur selektiven Hydrodesulfurierung von Schwefelverbindungen und Olefine umfassenden FCC-Benzinen, die sich von Kohlenwasserstoffen mit 5 Kohlenstoffatomen bis zu Verbindungen mit einem Siedepunkt von 250 °C erstrecken, wobei bei dem Verfahren ein Katalysator in geschwefelter Form verwendet wird, der einen Träger aus Aluminiumoxid, Cobalt und Molybdän und Kohlenstoff umfasst, wobei der Kohlenstoffgehalt zwischen 0,5 und 2,6 Gew.-% liegt, wobei die spezifische Oberfläche des Trägers kleiner als 200 m²/g ist, wobei das Verfahren bei einer Temperatur zwischen 200 und 400 °C und einem Gesamtdruck zwischen 1 und 2,5 MPa mit einem Volumenverhältnis zwischen Wasserstoff und Kohlenwasserstoffen zwischen 50 und 600 Liter/Liter durchgeführt wird.

2. Verfahren nach Anspruch 1, **dadurch gekennzeichnet, dass** die spezifische Oberfläche des Trägers kleiner als 150 m²/g ist.

## Claims

1. Process for the selective hydrodesulfurization of FCC gasolines comprising sulfur compounds and olefins, extending from hydrocarbons having 5 carbon atoms to compounds having a boiling point of 250°C, said process utilizing a catalyst in sulfurized form and comprising an alumina, cobalt and molybdenum and carbon support, the carbon content being between 0.5% and 2.6% by weight, the specific surface area of the support being less than 200 m²/g, said process being performed at a temperature of between 200 and 400°C and a total pressure of between 1 and 2.5 MPa with a volume ratio of the hydrogen to the hydrocarbons of between 50 and 600 litres/litre.

2. Process according to Claim 1, **characterized in that** the specific surface area of the support is less than 150 m2/g.
